Europäisches Patentamt

European Patent Office

Office européen des brevets

(11) Publication number: **0 335 373**
**A2**

## (12) EUROPEAN PATENT APPLICATION

(21) Application number: **89105544.4**

(22) Date of filing: **29.03.89**

(51) Int. Cl.⁴: **G06F 3/023 , G06F 3/02**

(30) Priority: **30.03.88 JP 74539/88**

(43) Date of publication of application:
**04.10.89 Bulletin 89/40**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Arai, Makoto c/o Patent Division**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) Hardware status switching input control system.

(57) A register (13) is provided for storing a key selection data indicating which key is depressed. A keyboard controller (7) sets the key selection data to the register in response to the depression of the key. A timer (15) interrupts a CPU (17) at a predetermined interval. Each time being interrupted, the CPU refers the register to recognize which key is depressed and and performs switching of a hardware status if the key selection data indicates that a key assigned to switch the hardware status is depressed.

F I G. 1

EP 0 335 373 A2

# Hardware status switching control system

The present invention relates to a key input control system, and more particularly to a hardware status switching control system for switching a hardware status at an arbitrary time, by using a function key.

A rapid development of a semiconductor technology produces a highly-integrated and high-speed CPU of 16 and 32 bits, for example. Along with the development of the CPU, various personal computers have been developed.

Such a personal computer may be required to switch its hardware status. For example, a CPU clock must be changed. More specifically, when an application to be executed must be processed at high speed such as a single user multitask or a multiuser multitask, the CPU clock must be higher. On the contrary, when a game program for example is executed at the same speed as that of the multitask, an operator cannot play correctly. In this case, the CPU clock must be changed to a low speed in response to an operator,s request.

Further, a personal computer is which is provided a plasma display (a liquid crystal display) as a standard and which is connectable to a CRT display as an option. Such computer is required to change the displays depending on an application program to be executed. When the application program uses the CRT display, the computer must change the plasma display to the CRT display and vice versa.

Further, when a computer is provided with a single font and a double font as a character type to be displayed (printed), the font to be used must be selected.

The hardware status described above may preferably be switched under an operating system program (OS) or an application program being executed.

The above switching has been executed in two conventional methods.

First method uses a keyboard interrupt. More specifically, in response to a specified function key, a CPU (a sub CPU) incorporated into a keyboard unit interrupts a main CPU. In response to the interrupt, the main CPU executes a keyboard interrupt routine, determines which key is depressed, and executes a processing corresponding to the depressed key.

However, this method has two drawbacks. First, the switching control is carried out only under an application program being executed. Second, the switching control is performed by depressing a function key. However, when the function key is assigned to a specific use in the application program, the switching control cannot be performed.

The second method uses a timer interrupt. A main CPU is interrupted at a predetermined period by a time out signal from the timer. In response to the interrupt, the main CPU inquires of a sub CPU incorporated in a keyboard if a predetermined function key is depressed. If the predetermined function key is depressed, a predetermined processing (switching control) assigned to the function key is executed by a basic input and output program (BIOS).

However, the main CPU operate a synchronous with the sub CPU. Thus, when the main CPU performs the inquiry operation, the sub CPU cannot respond to the inquiry promptly. The main CPU must wait several hundred microseconds, usually. Such delay may cause the main CPU to operate erroneously. For example, assume that the main CPU has been executing a communication program before interrupted. In a high-speed communication, one character is transmitted at an interval of 100 - 200 microseconds. Accordingly, the main CPU fails to receive the transmitted character.

An object of the present invention is to provide a key input control system which can eliminate the wait time and prevent an erroneous operation of the main CPU when a specific key is detected by using a timer interrupt.

In order to achieve the above object, a key input control system according to the present invention, comprises: keyboard means provided with at least one key assigned to a specific function, for outputting key selection data; storage means for storing the key selection data output from said keyboard means; timer means for outputting an interrupt signal at a predetermined interval; and central processing unit means for, in response to the interrupt signal from said timer means, referring the key selection data stored in said storage means, recognizing which key is depressed, and performing a processing corresponding to a function assigned to the key.

According to the present invention, a switching status register is provided. When a specific function key is depressed for switching the hardware status, the sub CPU detects the function key and stores the key selection data in the switching status register through a data bus. Upon receiving an interrupt signal from a timer, the main CPU refers the switching status register to recognize that a function key is depressed (or which function key is depressed) without inquiring of the sub CPU. Accordingly, the wait time described above can be eliminated and the interrupted program may cause no erroneous operation.

Other objects and features of the present invention will be apparent from the following description taken in conjunction with the following drawings in which:

Fig. 1 is a block diagram showing an embodiment of the present invention;·

Fig. 2 is a flowchart showing an operation of a key input control of the embodiment shown in Fig. 1; and

Fig. 3 is a flowchart showing an operation of a timer interrupt control of the embodiment shown in Fig. 1.

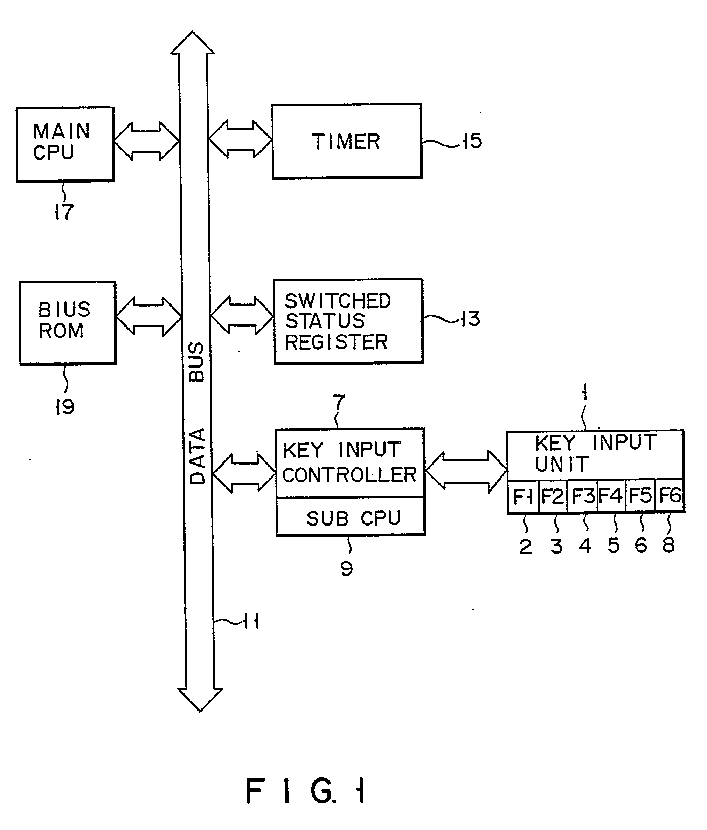

Fig. 1 is a block diagram showing an embodiment of the present invention. A key input unit 1 is provided with function keys 2, 3, 4, 5, 6, and 8 which are assigned to switch hardware statuses, respectively. The key input unit 1 is connected to a key input controller 7. The key input controller 7 incorporates a sub CPU 9, and detects which key is depressed in response to a key depressed signal from the key input unit 1, and load a key selection signal in a switched status register 13 through a data bus 11. The switched status register 13 holds status data of the input key. In this embodiment, register 13 holds data indicating whether a function key is depressed or not and data indicating which key is depressed. The register 13 may hold only the data indicating that a key is depressed, and a BIOS to be described later may detect which key is depressed. A timer 15 outputs a time out signal at a predetermined interval, and supplies it to the main CPU 17 through a data bus 11. The CPU 17 controls input and output units connected to the data bus 11. The BIOS ROM 19 stores a basic control program of the input and output units. The sub CPU 9 operates a synchronous with the main CPU 17.

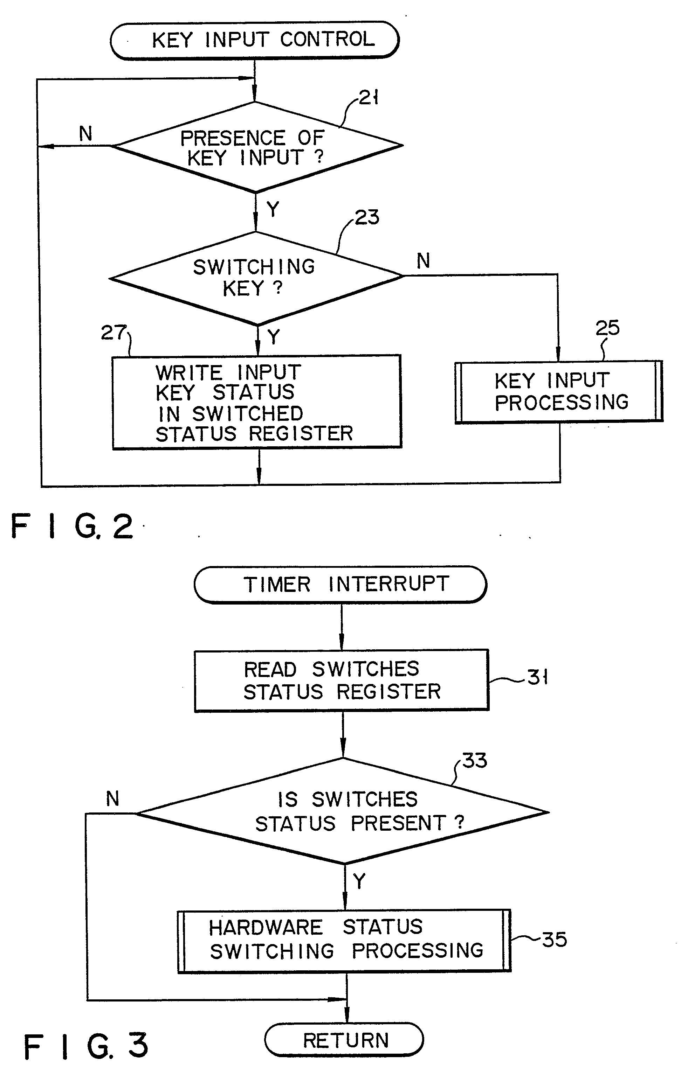

An operation of the embodiment described above will now be described with reference to the flowcharts shown in Figs. 2 and 3.

Fig. 2 is a flowchart showing the key input control. The sub CPU 9 incorporated in the key input controller 7 determines in step 21 if a key is input. If no key is input, the CPU 9 waits in step 21 until a key is input. Upon determining in step 21 that a key is input, the CPU 9 determines in step 23 if the input key is a specific function key assigned to change a hardware status. If the input key is not the specific function key, the CPU 9 performs a key input processing operation for other keys in step 25. Since the key input processing of step 25 is not directly related to the present invention, and therefore a description thereof is omitted.

On the contrary, if a function for switching a hardware status is determined to be depressed in step 23, the CPU 9 loads key input status data indicating which function key is depressed, in the switched status register 13.

Fig. 3 is a flowchart showing an operation of the main CPU 17. As described above, the timer 15 interrupts the main CPU 17. In response to the interrupt, the CPU 17 reads, in step 31, the key input status stored in the switched status register 13. In step 33, the CPU 17 determines from the key input status data if a function key indicating a switching of a hardware status is depressed. If the function key indicating the switching of the hardware status is not depressed, the CPU executes a timer interrupt processing operation in step 37.

On the contrary, if the function key indicating the switching of the hardware status is depressed, the CPU 17 executes a hardware status switching operation in step 35. More specifically, if a function key to switch a CPU clock is depressed, the CPU 17 changes the CPU clock. If a function key indicating a switching among the CRT display, the plasma display, and the liquid crystal display is depressed, the CPU 17 changes the display. If a function key indicating a switching of a display resolution ($640 \times 200$, $640 \times 350$, and $640 \times 480$ and the like) of the plasma display is depressed, the CPU 17 changes the display resolution. Furthermore, if a function key indicating a switching between the single font and the double font, the CPU 17 changes the font. Thereafter, the CPU 17 clears the contents of the switched status register 13.

Note that in the above embodiment, a control has been described of promptly determining if a function key is depressed by exemplifying a switching of hardware statuses, but the present invention is not limited to the above embodiment.

For example, a key to be detected may be any key other than the function keys. Furthermore, any function may be assigned to any key.

## Claims

1. A key input control system including keyboard means (1) provided with at least one key (2, 3, 4, 5, 6, or 8) assigned to a specific function, for outputting key selection data in response to a selection of a key; and timer means for outputting an interrupt signal at a predetermined interval, characterized in that there are provided:
storage means (13) for storing the key selection data output from said keyboard means; and
central processing unit (CPU) (17) means for, in response to the interrupt signal from said timer means, referring the key selection data stored in said storage means, recognizing which key is selected, and performs a processing operation corresponding to the selected key.

2. A system according to claim 1, characterized in that said storage means comprises a register.

3. A system according to claim 1, characterized in that said keyboard means includes a second central processing unit (CPU) means, and said second CPU means operates a synchronously with said first CPU means.

4. A system according to claim 3, characterized in that:
said keyboard means is provided with a plurality of function keys;
said storage means stores, corresponding to the respective keys, data indicating whether the key is selected; and
said second CPU means sets active data of the selection key data stored in said storage means, in response to the selection of any of the key.

5. A system according to claim 4, characterized in that the plurality of function keys are used to switch the hardware status switching control.

6. A system according to claim 5, characterized in that the hardware status switching control includes controls of a switching of a clock rate of said first CPU means, a switching among a CRT display, a plasma display and a liquid crystal display, and a switching of a single font and a double font.

7. A system according to claim 1, characterized in that said said storage means, said keyboard means, said timer means, and said CPU means are connected through a data bus.

8. A key input control method, comprising:
setting key selecting data in a register in response to a selection of any key among a plurality of keys provided with a keyboard, each key being assigned to a specific function;
supplying as an interrupt signal a timer signal output from a timer at a predetermined interval to a central processing unit; and
recognizing which key is selected stored in the register and performs a function assigned to the selected key, in response to the interrupt signal.

F I G. 1

KEY INPUT CONTROL

PRESENCE OF KEY INPUT ? 21

N

Y

SWITCHING KEY ? 23

N

Y

WRITE INPUT KEY STATUS IN SWITCHED STATUS REGISTER 27

KEY INPUT PROCESSING 25

FIG. 2

TIMER INTERRUPT

READ SWITCHES STATUS REGISTER 31

IS SWITCHES STATUS PRESENT ? 33

N

Y

HARDWARE STATUS SWITCHING PROCESSING 35

RETURN

FIG. 3